# EUROPÄISCHE PATENTSCHRIFT

(11) **EP 1 500 615 B1**
(45) Veröffentlichungstag und Bekanntmachung des Hinweises auf die Patenterteilung: **24.05.2006**
(21) Anmeldenummer: 04006397.6
(22) Anmeldetag: 17.03.2004
(51) Int. Cl.: B65G 21/20

(54) **Bandfördervorrichtung mit einer Abdichtvorrichtung**
Belt conveyor device with a sealing device
Dispositif de transport à courroie avec un dispositif d'étanchéité

(30) Priorität: 23.07.2003 DE 20311348 U
(43) Veröffentlichungstag der Anmeldung: 26.01.2005
(73) Patentinhaber: Joseph Vögele AG, 68146 Mannheim (DE)
(72) Erfinder: Weiser, Ralf, 68526 Ladenburg (DE); Fickeisen, Steffen, 67098 Bad Dürkheim (DE)
(74) Vertreter: Grünecker, Kinkeldey, Stockmair & Schwanhäusser Anwaltssozietät

(56) Entgegenhaltungen:
- EP-A- 0 369 605
- EP-A- 1 097 886
- DE-U- 29 805 219

## Beschreibung

Die Erfindung betrifft eine Bandfördervorrichtung der im Oberbegriff des Anspruchs 1 angegebenen Art.

Beispielsweise in Straßenfertigern oder Beschickern werden Bandfördervorrichtungen zum Fördern von bituminösem oder Beton-Einbaugut aus einem Bunker verwendet. Die Förderstrecke kann dabei in Förderrichtung ansteigen. Dieses Fördergut enthält feste Bestandteile unterschiedlicher Größen, ist fließfähig, und neigt zum Anhaften. Ferner werden solche Bandfördervorrichtungen fallweise angehalten, obwohl sich Fördergut im Aufgabebereich bzw. Bunker befindet. Deshalb muss dafür Sorge getragen werden, dass seitliche Begrenzungen ein Wegfließen des Förderguts verhindern, und auch eine Abdichtvorrichtung vorgesehen ist, die quer zur Gurtlaufrichtung wirkt und verhindert, dass das Fördergut entgegengesetzt zur Bandlaufrichtung wegfließt. In der Abdichtvorrichtung ist eine Barriere vorgesehen, die z.B. eine stationäre Blechwand ist und mit der Gurtoberfläche im Bereich eines unter dem Gurt liegenden, gurtführenden Teils einen relativ engen Dichtspalt bildet. Der Dichtspalt wird so eng wie möglich bemessen, um zu verhindern, dass beispielsweise im Stillstand des Gurts, Fördergut entgegen der Gurtlaufrichtung austritt. Die Dichtspaltweite kann bei diesem Konzept jedoch nicht optimal klein gewählt werden, weil die Gurtdicke gegebenenfalls nicht gleichbleibend ist, und weil Fremdkörper bzw. Bestandteile des Förderguts an dem Gurt haften können und dann in Gurtlaufrichtung im Dichtspalt verklemmt werden. Ferner können Fremdkörper oder Bestandteile des Förderguts an die innere Gurtoberfläche gelangen und dort anhaften, die dann an dem gurtführenden Teil den Gurt anheben, so dass dieser im Dichtspalt mit der Barriere kollidiert. Daraus können Schäden am Gurt oder der Abdichtvorrichtung oder sogar eine signifikante Funktionsstörung der Bandfördervorrichtung resultieren. Diesem Nachteil wird in der Praxis dadurch abgeholfen, dass eine an der Barriere befestigte Dichtlippe aus flexiblem Material über den Unterrand der Barriere nach unten übersteht, die im gestreckten Zustand mit der Gurtoberfläche den Dichtspalt begrenzt. Die Dichtlippe neigt jedoch bereits unter dem Druck des Förderguts zum Nachgeben, wodurch Fördergut austreten kann. Ferner wird die Dichtlippe leicht durch mitgeförderte feste Bestandteile oder Fremdkörper in Förderrichtung umgeschlagen oder beschädigt.

Weiterer Stand der Technik ist enthalten in DE 298 05 219 U, EP 1 097 886 A und EP 0 369 605 A. Bei dem aus DE 298 05 219 U bekannten Bandförderer mit Mitnehmerprofilen auf der Oberfläche des Gurts werden die Oberfläche und die Mitnehmer von zwei mit Zungen ausgestatteten, elastischen Abstreifern kontaktiert, die im Abstand oberhalb der Gurtoberfläche an einer Tragstruktur befestigt sind. Bei dem aus EP 1 097 886 A bekannten Bandförderer sind schwenkbare Seitenwände oberhalb der Randbereiche des Gurts vorgesehen, um einen tiefen Förderkanal zu begrenzen. Die Seitenwände stehen der Gurtoberfläche mit einem Zwischenabstand gegenüber, der einen Dichtspalt bildet. Die Seitenwände lassen sich zur Vergrößerung des Dichtspalts verstellen. Bei der aus EP 0 369 605 A bekannten Bandfördervorrichtung sind an drei Seiten einer Befüllschütte, die zur Oberfläche des Bandes gerichtet ist, flexible Schürzen angeordnet, die die Oberfläche des Bandes kontaktieren und das Austreten von Schüttgut nach außen bzw. entgegen der Förderrichtung verhindern.

Der Erfindung liegt die Aufgabe zugrunde, eine Bandfördervorrichtung anzugeben, bei der eine dauerhafte, störungssichere und effektive Abdichtung gegen den Austritt von Fördergut möglich ist.

Die gestellte Aufgabe wird mit den Merkmalen des Anspruchs 1 gelöst.

Die Bandfördervorrichtung arbeitet dank des Sperrelementes störungssicher, weil das Sperrelement bei Bedarf vorübergehend auslenkbar ist und einen Gegenstand oder Bestandteil des Förderguts oder eine Gurtdickstelle durchgehen lässt, sich jedoch nach Durchgang sofort wieder zurückstellt und den engen Dichtspalt wiederherstellt, so dass kaum Fördergut unkontrolliert austritt. Dadurch werden Schäden an der Abdichtvorrichtung oder dem Gurt oder Funktionsstörungen der Bandfördervorrichtung vermieden. Die Abdichtvorrichtung ist ferner sehr effektiv, da wegen der Auslenkbarkeit des Sperrelements der tatsächliche Dichtspalt extrem eng eingestellt werden kann, so dass auch relativ dünnflüssiges Fördergut nicht austritt. Gegebenenfalls kontaktiert das Sperrelement sogar die Gurtoberfläche.

Die Durchtrittsöffnung geht entweder über die Gurtbreite durch, oder sie ist länger oder kürzer als die Gurtbreite.

Das Sperrelement kann einstückig sein, oder aus mehreren nebeneinanderliegenden Segmenten bestehen.

Zweckmäßig wird das Sperrelement entgegengesetzt zur Auslenkrichtung an einem Anschlag abgefangen, der die Dichtspaltweite begrenzt. Der Anschlag hält zusammen mit der Belastung des Sperrelements das Sperrelement stets in der richtigen Position, in der die gewünschte Dichtspaltweite eingehalten ist. Bei Durchgang einer Gurtverdickung und/oder eines festen Bestandteils wird das Sperrelement vorübergehend ausgelenkt, um nachfolgend sofort unter der Last wieder in die vom Anschlag vorgegebene, korrekte Position zurückzukehren. Falls der Anschlag einstellbar ist, lässt sich die Dichtspaltweite nach Wunsch verändern.

Zweckmäßig wird die Dichtspaltweite in Abstimmung auf die Größe der festen Bestandteile des Förderguts und/oder die Konsistenz des Förderguts gewählt, zweckmäßig kleiner als die kleinste Bestandteilgröße. Ein derart enger Dichtspalt ist hinsichtlich Störungen vollständig unkritisch, weil das Sperrelement zur Gänze oder mit nur einem Segment auslenkbar ist, falls dies zum Vermeiden einer Störung erforderlich sein sollte, hingegen erzeugt bei nicht ausgelenktem Sperrelement bzw. Segment der enge Dichtspalt eine hervorragende Abdichtwirkung gegen den Austritt von Fördergut.

Die Barriere ist zweckmäßig eine Querwand aus Blech, Gummi oder einem Elastomer mit einem beispielsweise in etwa zur Gurtoberfläche parallelen Unterrand, der von der Gurtoberfläche mit ausreichend großem Abstand entfernt liegt. Das Sperrelement ist eine Klappe mit einem benachbart zum Unterrand der Barriere angeordneten Sperrschenkel und ist beim Auslenken gegen die Rückstellbelastung verschwenkbar oder verschiebbar. Die verschwenkbare Lagerung des Sperrschenkels bietet den Vorteil eines präzise einhaltbaren Zwischenabstandes oder leichten Kontaktdrucks zwischen dem Sperrschenkel und der Barriere. Eine verschiebbare Lagerung ist baulich besonders einfach.

Bei einer zweckmäßigen Ausführungsform wird der Sperrschenkel an der an einem Staubereich der Barriere abgewandten Seite der Durchtrittsöffnung angeordnet, weil er in dieser Position leicht auslenkbar ist, selbst unter dem Staudruck des Förderguts. Dies schließt aber nicht aus, den Sperrschenkel an der anderen Seite der Barriere anzuordnen.

Der Sperrschenkel sollte in jedem Fall höher sein als die Weite der Durchtrittsöffnung.

Ferner sollte der Sperrschenkel eine zur Gurtoberfläche zumindest im Wesentlichen parallele untere Abstreifkante aufweisen. Bei einem flachlaufenden Gurt kann die Abstreifkante gerade sein. Bei einem trogförmigen Gurt sollte die Abstreifkante der Trogform angepasst sein.

Bei einer bevorzugten Ausführungsform ist der Sperrschenkel an einem Schwenkteil angeordnet, der in einer Schwenklagerung abgestützt ist, wobei der Anschlag an dem Schwenkteil oder einer Verlängerung des Schwenkteils angreift. Mit dem Abstand zwischen dem Dichtspalt und der Schwenklagerung lässt sich vorher bestimmen, wie leicht der Sperrschenkel ausgelenkt wird und umgehend wieder in die Abdichtlage zurückkehrt.

Bei einem schwenkbeweglichen Sperrelement sollte der Sperrschenkel den Unterrand der Barriere zugewandt eine Bogenkrümmung aufweisen, deren Bogenzentrum zumindest in etwa in der Schwenkachse liegt. Auf diese Weise wird unabhängig von der jeweiligen Schwenkstellung des Sperrschenkels bei dessen Auslenkung eine gute Abdichtung zwischen dem Sperrschenkel und dem Unterrand der Barriere erzeugt. Gegebenenfalls ist am Unterrand eine Dichtlippe oder dgl. vorgesehen, die mit dem Sperrschenkel zusammenwirkt.

Um das Sperrelement zuverlässig zurückzustellen, kann ein Ballast und/oder eine Federanordnung vorgesehen sein, die das Sperrelement in Richtung zum Anschlag belastet.

Zumindest der Sperrschenkel sollte ein Blech- oder Kunststoffformteil sein, das gegebenenfalls für das Fördergut haftunwillig ausgerüstet ist.

Günstig ist ferner, wenn der Schwenkteil eine Anlauffläche bildet, die, vorzugsweise, mit der Gurtoberfläche einen keilförmigen Einlaufspalt begrenzt. Durch die Keilform des Einlaufspalts kann ein mitgenommener fester Bestandteil des Förderguts das Sperrelement sehr leicht auslenken.

Ausführungsformen des Erfindungsgegenstandes werden anhand der Zeichnungen erläutert. Es zeigen:
- Fig. 1: eine Seitenansicht eines Teils einer Bandfördervorrichtung mit einer Abdichtvorrichtung, teilweise im Schnitt,
- Fig. 2: eine andere Ausführungsform einer Abdichtvorrichtung, und
- Fig. 3: eine andere Ausführungsform einer Abdichtvorrichtung.

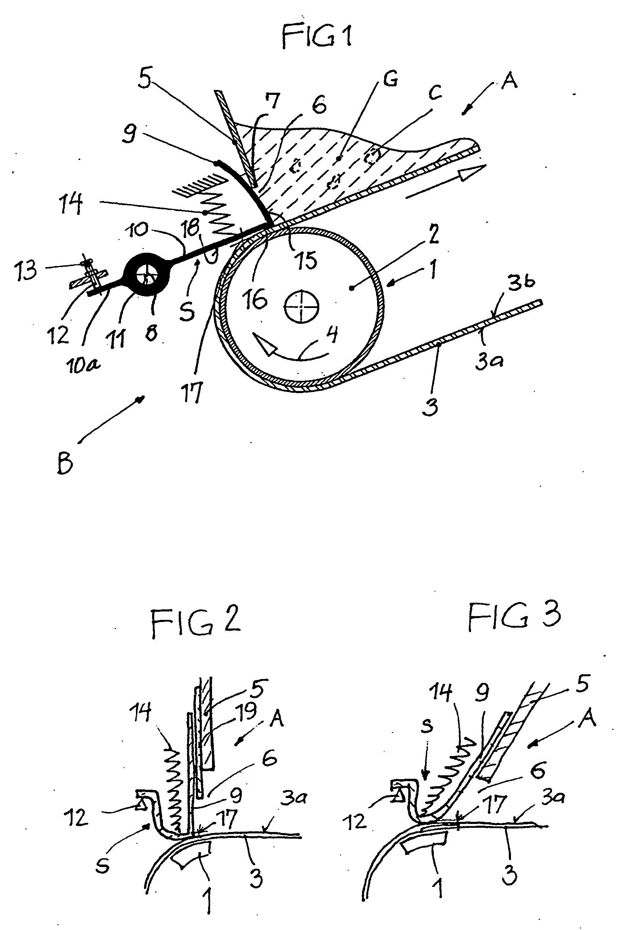

Eine in Fig. 1 gezeigte Bandfördervorrichtung B ist beispielsweise Teil einer Steig- oder Flachfördervorrichtung in einem Straßenfertiger oder Beschicker, um Fördergut G beispielsweise aus einem nicht gezeigten Bunker (Aufgabebereich) zu einem Abgabebereich zu fördern. Die Bandfördervorrichtung B ist mit einer Abdichtvorrichtung A ausgestattet, die verhindern soll, dass das Fördergut G im Betrieb und/oder bei Stillstand der Bandfördervorrichtung unkontrolliert entgegengesetzt zur Förderrichtung austritt.

Das Fördergut G enthält feste Bestandteile C und ist beispielsweise ein bituminöses oder ein Beton-Einbaugut zum Herstellen von Verkehrsflächen. Solches Fördergut G ist fließfähig und neigt zum Anhaften. Die Bestandteile C können beispielsweise feste Körner in unterschiedlichen Komgrößen sein.

Von der Bandfördervorrichtung B ist ein gurtfördernder Teil 1 erkennbar, hier eine Umlenkrolle 2, um die ein Gurt 3 mit seiner inneren Gurtoberfläche 3b und in festgelegter Zuordnung zur Abdichtvorrichtung A geführt wird. Auf der äußeren Gurtoberfläche 3a wird das Fördergut G in Richtung des Pfeiles 4 gefördert.

Die Abdichtvorrichtung A weist eine quer zur Gurtlaufrichtung angeordnete Barriere 5 auf, beispielsweise eine Blech- oder Gummiwand, deren unterer, beispielsweise im Wesentlichen zur Gurtoberseite 3a paralleler oder mit beliebiger Geometrie verlaufender Unterrand 7 in einem deutlichen Abstand von der Gurtoberseite 3 angeordnet ist und mit dieser eine Durchtrittsöffnung 6 begrenzt. Die Weite der Durchtrittsöffnung 6 ist zweckmäßig größer als die größte Bestandteilgröße. Die Durchtrittsöffnung 6 kann so lang sein wie die Gurtbreite, oder kürzer bzw. länger.

Die Barriere 5 begrenzt an ihrer in Fig. 1 rechten Seite einen Stauraum für das Fördergut G. Auf der dem Stauraum abgewandten Seite der Durchtrittsöffnung 6 ist ein Sperrelement S vorgesehen, das bei der gezeigten Ausführungsform in Fig. 1 eine einstückige schwenkbare Klappe mit einem bogenförmig gekrümmten Sperrschenkel 9, einem Schwenkteil 10 und einer Schwenkteil-Verlängerung 10a ist. Das Sperrelement S ist in einem stationären Schwenklager 11 um eine in etwa zur Achse der Umlenkrolle 2 parallele Schwenkachse 8 gegen die Last einer Feder 14 (und/oder eines Ballasts) aus der gezeigten Lage von der Gurtoberseite 3a weg auslenkbar. Der Sperrschenkel 9 ist breiter als die Weite der Durchtrittsöffnung 7. Der Sperrschenkel 9 streift mit seiner Vorderseite 15 am Unterrand 7 oder ist diesem mit engem Abstand zugeordnet. Am Schwenkteil 10, hier der Schwenkteil-Verlängerung 10a, greift ein stationärer Anschlag 12 an, der die in Fig. 1 gezeigte Abdichtposition des Sperrelements S festlegt. Eine Verstellschraube 13 ermöglicht die Verstellung des Anschlags 12. Der Schwenkteil 10 bildet mit seiner Unterseite eine Anlauffläche 18. Der Sperrschenkel 9 endet unten in einem Abstreifrand 16, der zumindest in etwa parallel zur Gurtoberseite 3a verläuft und mit der Gurtoberseite 3a einen engen Dichtspalt 17 begrenzt. Gegebenenfalls berührt der Abstreifrand 16 sogar die Gurtoberseite 3a, je nach Einstellung des Anschlags 12. Gegebenenfalls weist das Sperrelement S mehrere nebeneinanderliegende, auch einzeln auslenkbare Segmente auf.

In der gezeigten Betriebsstellung wird bei laufender oder stillstehender Bandfördervorrichtung B durch den Dichtspalt 17 und den Dichtbereich zwischen dem Sperrschenkel 9 und dem Unterrand 7 das Austreten des Förderguts G entgegengesetzt zur Gurtlaufrichtung verhindert. Läuft eine Gurtverdickung um die Umlenkrolle 2, so wird das Sperrelement S oder wenigstens ein Segment gegen die Kraft der Feder 14 ausgelenkt. Fördergut G kann dennoch nicht austreten. Haftet an der Gurtoberseite 3a ein fremder Gegenstand oder ein fester Bestandteil C aus dem Fördergut G, so läuft dieser um die Umlenkrolle 2 gegen die Anlauffläche 18, wodurch das Sperrelement S oder ein Segment vorübergehend ausgelenkt wird und diesen Fremdkörper passieren lässt, ehe das Sperrelement S bzw. das Segment unter der Kraft der Feder 14 sofort wieder in die gezeigte Betriebsstellung zurückkehrt. Sollte an der inneren Bandoberfläche 3b ein Fremdkörper oder ein fester Bestandteil C haften, der zwischen dem Gurt 3 und der Umlenkrolle 2 durchbewegt wird, dann hebt der sich lokal ausbeulende Gurt 3 das Sperrelement S oder ein Segment vorübergehend an, das nach Passieren des Gegenstandes wieder in die gezeigte Lage zurückkehrt. Auf diese Weise wird einerseits verhindert, dass Fördergut G unkontrolliert entgegengesetzt zur Gurtlaufrichtung austreten kann, und andererseits, dass der Gurt oder die Abdichtvorrichtung beschädigt werden.

Das Sperrelement S oder zumindest der Sperrschenkel 9 kann ein Blech- oder Kunststoffformteil sein oder aus mehreren Formteilen (Segmenten) bestehen.

Bei der Ausführungsform der Abdichtvorrichtung A in Fig. 2 wird das Sperrelement S in etwa parallel zur Barriere 5 verschiebbar geführt. Zwischen dem Sperrschenkel 9 des Sperrelements S und der Barriere 5 kann eine Gummiplatte 19 vorgesehen sein, die in die Durchtrittsöffnung 6 vorsteht und vom Staudruck des Förderguts G gegen den Sperrschenkel 9 angepresst wird. Für das Sperrelement S sind in Fig. 2 nicht gezeigte Führungseinrichtungen vorgesehen. Der Querschnitt des Sperrelementes S ist hier beispielsweise J-förmig. Auch dieses Sperrelement S könnte aus einzeln verschieb- und rückstellbaren Segmenten bestehen.

In den Fig. 1 und 2 sind die Barriere 5 und der Sperrschenkel 9 im Wesentlichen senkrecht zur Gurtoberfläche 3a ausgerichtet.

Bei der Ausführungsform in Fig. 3 sind die Barriere 5 und der Sperrschenkel 9 schräggestellt, derart, dass die Verschiebebewegung des Sperrelements S (oder des jeweiligen Segments) mit einer Bewegungskomponente in Gurtlaufrichtung erfolgt, was das Auslenken und gegebenenfalls auch das Rückstellen des Sperrelements S unter der Kraft der Feder 14 erleichtert.

Zweckmäßig formt das Sperrelement S (Anlauffläche 18) mit der Gurtoberfläche 3a einen keilförmigen Einlaufspalt. Die Lagerung und der Anschlag für das Sperrelement könnten auch an der Barriere 5 angebracht sein. Der Sperrschenkel 9 könnte sich auch auf der anderen Seite der Barriere 5 befinden.

## Patentansprüche

1. Bandfördervorrichtung (B), insbesondere für fließfähiges Fördergut (G) mit festen Bestandteilen (C), mit einer Abdichtvorrichtung (A), in der eine quer zur Gurtlaufrichtung (4) orientierte, stationäre Fördergut-Aufstau-Barriere (5) mit einem Unterrand (7) beabstandet von einer Gurtoberfläche (3a) vorgesehen ist, und mit einem Dichtspalt (17), der quer zur Gurtlautrichtung verläuft und an die einem gurtführenden Teil (1) abgewandte Gurtoberfläche (3a) angrenzt, **dadurch gekennzeichnet, dass** zwischen der Barriere (5) und der Gurtoberfläche (3a) eine Durchtrittsöffnung (6) vorgesehen ist, und dass die Durchtrittsöffnung (6) durch ein relativ zur Barriere (5) und dessen Unterrand (7) in einer Auslenkrichtung verschiebbares Sperrelement (S) verschlossen ist, das den eigentlichen Dichtspalt (17) mit der Gurtoberfläche (3a) bildet, und von der Gurtoberfläche (3a) weg auslenkbar und entgegengesetzt zur Auslenkrichtung belastet ist.

2. Bandfördervorrichtung nach Anspruch 1, **dadurch gekennzeichnet, dass** die Durchtrittsöffnung (6) über die Gurtbreite durchgeht.

3. Bandfördervorrichtung nach Anspruch 1, **dadurch gekennzeichnet, dass** das Sperrelement (S) aus mehreren ggfs. relativ zueinander beweglichen, nebeneinanderliegenden Segmenten besteht.

4. Bandfördervorrichtung nach Anspruch 1, **dadurch gekennzeichnet, dass** das Sperrelement (S) entgegengesetzt zur Auslenkrichtung an einem, vorzugsweise einstellbaren, Anschlag (12) abgefangen ist, der die Weite des Dichtspalts (17) begrenzt.

5. Bandfördervorrichtung nach Anspruch 1, **dadurch gekennzeichnet, dass** die Dichtspaltweite auf die Größe der festen Bestandteile (C) des Förderguts (G) abgestimmt ist, vorzugsweise, kleiner ist als die kleinste Bestandteilgröße.

6. Bandfördervorrichtung nach Anspruch 1, **dadurch gekennzeichnet, dass** die Barriere (5) eine Querwand, vorzugsweise aus Blech, Gummi oder Elastomer mit einem Unterrand (7) und das Sperrelement (S) eine schwenkbar oder verschiebbar gelagerte Klappe mit einem benachbart zum Unterrand (7) angeordneten Sperrschenkel (9) ist.

7. Bandfördervorrichtung nach Anspruch 6, **dadurch gekennzeichnet, dass** der Unterrand (7) zur Gurtoberfläche (3a) zumindest in etwa parallel ist.

8. Bandfördervorrichtung nach Anspruch 6, **dadurch gekennzeichnet, dass** der Sperrschenkel (9) an der einem Fördergut-Staubereich der Barriere (5) abgewandten Seite der Durchtrittsöffnung (6) angeordnet ist.

9. Bandfördervorrichtung nach Anspruch 6, **dadurch gekennzeichnet, dass** der Sperrschenkel (9) höher ist als die Weite der Durchtrittsöffnung (6).

10. Bandfördervorrichtung nach Anspruch 6, **dadurch gekennzeichnet, dass** der Sperrschenkel (9) eine zur Gurtoberfläche (3a) zumindest im Wesentlichen parallele, untere Abstreifkante (16) aufweist.

11. Bandfördervorrichtung nach Anspruch 6, **dadurch gekennzeichnet, dass** der Sperrschenkel (9) an einem Schwenkteil (10) angeordnet ist, der in einer Schwenklagerung (11) mit zumindest in etwa zur Gurtoberfläche (3a) paralleler Schwenkachse und im Abstand von der Barriere (5) gelagert ist, und dass, vorzugsweise, der Anschlag (12) auf den Schwenkteil (10) oder eine Verlängerung (10a) des Schwenkteils (10) ausgerichtet ist.

12. Bandfördervorrichtung nach Anspruch 6, **dadurch gekennzeichnet, dass** der Sperrschenkel (9) dem Unterrand (7) zugewandt eine Bogenkrümmung mit in etwa in der Schwenkachse der Schwenklagerung (11) liegendem Krümmungszentrum aufweist.

13. Bandfördervorrichtung nach Anspruch 1, **dadurch gekennzeichnet, dass** das Sperrelement (S) durch einen Ballast und/oder eine Federanordnung (14) gegen den Anschlag (12) belastet ist.

14. Bandfördervorrichtung nach Anspruch 6, **dadurch gekennzeichnet, dass** zumindest der Sperrschenkel (9) des Sperrelements (S) ein Blech- oder Kunststoff-Formteil ist.

15. Bandfördervorrichtung nach Anspruch 11, **dadurch gekennzeichnet, dass** der Schwenkteil (10) eine Anlauffläche (18) bildet, die, vorzugsweise, mit der Gurtoberfläche (3a) einen keilförmigen Einlaufspalt begrenzt.

## Claims

1. Belt conveyor device (B), particularly for free-flow material to be conveyed (G) with solid components (C), with a sealing device (A) in which a stationary build-up barrier (5) for the material to be conveyed arranged transversely to the belt running direction (4) is provided with a lower edge (7) spaced apart from a belt surface (3a), and with a sealing gap (17) which runs transversely to the belt running direction and abuts the belt surface (3a) facing away from a belt-guiding part (1), **characterised in that** a passage opening (6) is provided between the barrier (5) and the belt surface (3a) and **in that** the passage opening (6) is closed by a locking element (S) which can be displaced in a deflection direction relative to the barrier (5) and its lower edge (7), wherein the locking element (S) forms the actual sealing gap (17) with the belt surface (3a) and can be deflected away from the belt surface (3a) and is loaded against the deflection direction.

2. Belt conveyor device according to claim 1, **characterised in that** the passage opening (6) goes across the breadth of the belt.

3. Belt conveyor device according to claim 1, **characterised in that** the locking element (S) consists of a plurality of segments lying side by side, possibly movable relative to each other.

4. Belt conveyor device according to claim 1, **characterised in that** the locking element (S) is checked against the deflection direction on a, preferably adjustable, stop (12) which defines the width of the sealing gap (17).

5. Belt conveyor device according to claim 1, **characterised in that** the width of the sealing gap is oriented to the size of the solid components (C) of the material to be conveyed (G), preferably being smaller than the smallest component size.

6. Belt conveyor device according to claim 1, **characterised in that** the barrier (5) is a cross wall, preferably made of sheet metal, rubber or elastomer, with a lower edge (7) and the locking element (S) is a flap mounted so as to be pivotable or displaceable with a locking arm (9) arranged adjacent to the lower edge (7).

7. Belt conveyor device according to claim 6, **characterised in that** the lower edge (7) is at least approximately parallel to the belt surface (3a).

8. Belt conveyor device according to claim 6, **characterised in that** the locking arm (9) is arranged on the side of the passage opening (6) facing away from a conveyed material build-up area of the barrier (5).

9. Belt conveyor device according to claim 6, **characterised in that** the locking arm (9) is higher than the width of the passage opening (6).

10. Belt conveyor device according to claim 6, **characterised in that** the locking arm (9) comprises a lower stripping edge (16) at least substantially parallel to the belt surface (3a).

11. Belt conveyor device according to claim 6, **characterised in that** the locking arm (9) is disposed on a pivoting part (10) which is mounted in a pivot bearing (11) with a pivot axis at least approximately parallel to the belt surface (3a) and at a distance from the barrier (5) and **in that** the stop (12) is preferably aligned with the pivoting part (10) or an extension (10a) of the pivoting part (10).

12. Belt conveyor device according to claim 6, **characterised in that** the locking arm (9) comprises facing the lower edge (7) an arcuate curve with a curve centre lying approximately in the pivot axis of the pivot bearing (11).

13. Belt conveyor device according to claim 1, **characterised in that** the locking element (S) is loaded against the stop (12) by a ballast and / or a spring arrangement (14).

14. Belt conveyor device according to claim 6, **characterised in that** at least the locking arm (9) of the locking element (S) is a sheet metal or plastic moulded component.

15. Belt conveyor device according to claim 11, **characterised in that** the pivoting part (10) forms a running area (18) which preferably defines a wedge-shaped inlet gap with the belt surface (3a).

## Revendications

1. Transporteur à bande (B), en particulier pour matières coulantes (G) avec des constituants solides (C), comportant un dispositif d'étanchéité (A), dans lequel est prévue une barrière d'accumulation des matières (5) stationnaire, orientée perpendiculairement au sens de défilement (4) de la bande et munie d'un bord inférieur (7) situé à distance d'une face supérieure (3a) de la bande, et comportant une fente d'étanchéité (17) qui est orientée perpendiculairement au sens de défilement (4) de la bande et qui est adjacente à la face supérieure (3a), opposée à la pièce (1) faisant défiler la bande, **caractérisé en ce qu'**une ouverture de passage (6) est prévue entre la barrière (5) et la face supérieure (3a) de la bande, et **en ce que** l'ouverture de passage (6) est fermée par un élément de fermeture (S), qui est mobile dans une direction de déviation par rapport à la barrière (5) et le bord inférieur (7) de celle-ci et qui forme la fente d'étanchéité (17) proprement dite avec la face supérieure (3a) de la bande, et qui peut être dévié pour s'écarter de la face supérieure (3a) de la bande et est sollicité dans le sens opposé à la direction de déviation.

2. Transporteur à bande selon la revendication 1, **caractérisé en ce que** l'ouverture de passage (6) couvre toute la largeur de la bande.

3. Transporteur à bande selon la revendication 1, **caractérisé en ce que** l'élément de fermeture (S) est formé par plusieurs segments juxtaposés et, le cas échéant, mobiles les uns par rapport aux autres.

4. Transporteur à bande selon la revendication 1, **caractérisé en ce que** l'élément de fermeture (S), dans le sens opposé à la direction de déviation, est arrêté par une butée (12), qui est de préférence réglable et qui limite la largeur de la fente d'étanchéité (17).

5. Transporteur à bande selon la revendication 1, **caractérisé en ce que** la largeur de la fente d'étanchéité est ajustée à la taille des constituants solides (C) de la matière transportée (G), de préférence est inférieure à la plus petite taille d'un constituant.

6. Transporteur à bande selon la revendication 1, **caractérisé en ce que** la barrière (5) est une paroi transversale, de préférence en tôle, caoutchouc ou élastomère, comportant un bord inférieur (7), et l'élément de fermeture (S) est un abattant monté pivotant ou coulissant et comportant une branche de fermeture (9) agencée à proximité du bord inférieur (7).

7. Transporteur à bande selon la revendication 6, **caractérisé en ce que** le bord inférieur (7) est au moins sensiblement parallèle à la face supérieure (3a) de la bande.

8. Transporteur à bande selon la revendication 6, **caractérisé en ce que** la branche de fermeture (9) est agencée sur le côté de l'ouverture de passage (6), qui est opposé à la zone d'accumulation des matières de la barrière (5).

9. Transporteur à bande selon la revendication 6, **caractérisé en ce que** la branche de fermeture (9) a une hauteur supérieure à la largeur de l'ouverture de passage (6).

10. Transporteur à bande selon la revendication 6, **caractérisé en ce que** la branche de fermeture (9) comporte un bord de raclage (16) inférieur, au moins sensiblement parallèle à la face supérieure (3a) de la bande.

11. Transporteur à bande selon la revendication 6, **caractérisé en ce que** la branche de fermeture (9) est agencée sur un élément pivotant (10), qui est monté dans un palier de pivotement (11), avec un axe de pivotement au moins sensiblement parallèle à la face supérieure (3a) de la bande, et à distance de la barrière (5), et **en ce que**, de préférence, la butée (12) est orientée vers l'élément pivotant (10) ou un prolongement (10a) de l'élément pivotant (10).

12. Transporteur à bande selon la revendication 6, **caractérisé en ce que** la branche de fermeture (9), du côté orienté vers le bord inférieur (7), comporte une courbure en arc dont le centre de courbure est situé sensiblement dans l'axe de pivotement du palier de pivotement (11).

13. Transporteur à bande selon la revendication 1, **caractérisé en ce que** l'élément de fermeture (S) est sollicité contre la butée (12) par un lest et/ou un système à ressort (14).

14. Transporteur à bande selon la revendication 6, **caractérisé en ce qu'**au moins la branche de fermeture (9) de l'élément de fermeture (S) est une pièce profilée en tôle ou matière plastique.

15. Transporteur à bande selon la revendication 11, **caractérisé en ce que** l'élément pivotant (10) forme une surface de butée (18) qui, de préférence, délimite conjointement avec la face supérieure (3a) de la bande une fente d'admission conique.
